# FASCICULE DE BREVET EUROPEEN

(11) **EP 1 852 722 B1**
(45) Date de publication et mention de la délivrance du brevet: **19.01.2011**
(21) Numéro de dépôt: 07300978.9
(22) Date de dépôt: 24.04.2007
(51) Int. Cl.: G02B 6/44

(54) **Cassette de lovage et de raccordement de fibres optiques**
Kassette zum Aufwickeln und Verbinden von Glasfasern
Cassette for coiling and connecting optical fibres

(30) Priorité: 04.05.2006 FR 0651611
(43) Date de publication de la demande: 07.11.2007
(73) Titulaire: Nexans, 75008 Paris (FR)
(72) Inventeur: Apere, Rodolphe, 78570, ANDRESY (FR); Sonza Reorda, Pietro, Rue Voltaire (Bat. A) 01220, DIVONNE LES BAINS (FR)
(74) Mandataire: Lenne, Laurence

(56) Documents cités:
- EP-A- 0 493 796
- EP-A- 0 617 304
- EP-A1- 0 716 325
- EP-A2- 0 795 767
- WO-A-97/41474
- WO-A-2004/092797
- WO-A-2005/088373
- WO-A1-00/03275
- WO-A2-02/41051
- WO-A2-98/08125
- WO-A2-2005/008307
- DE-A1- 4 341 999
- JP-A- 9 236 709
- JP-A- 2002 236 219
- US-B1- 6 192 180

## Description

La présente invention concerne une cassette optique pour le lovage et/ou pour le raccordement de fibres optiques.

Les fibres optiques sont fragiles du fait de leur très petit diamètre (de l'ordre de quelques centaines de micromètres) et de leur structure; elles ne peuvent donc pas être manipulées sans précautions particulières. Tout d'abord, un certain nombre de fibres optiques sont assemblées pour former un câble (par exemple une dizaine de fibres), lequel peut être aisément utilisé et installé. Cependant, la longueur des fibres optiques étant limitée (de l'ordre de quelques kilomètres au maximum) et la distance à parcourir pour acheminer l'information véhiculée par les fibres optiques étant généralement supérieure à cette longueur maximale, il est nécessaire de raccorder des câbles et donc des fibres optiques entre elles. De plus, la fibre optique destinée à être connectée à une localisation bien définie (une maison ou un appartement par exemple) doit être séparée des autres fibres du câble au voisinage de cette localisation. On utilise alors des cassettes qui ont pour fonction principale de protéger les fibres optiques à ces endroits de plus grande fragilité des fibres optiques due à la séparation et/ou au raccordement des fibres. Ces cassettes comportent généralement des moyens pour lover les fibres optiques de façon à stocker les surlongueurs de fibres et des moyens de raccordement de fibres entre elles. Le raccordement peut être réalisé sous forme d'épissures et/ou de connexions à l'aide de connecteurs dédiés. Une cassette peut ne contenir que des moyens de lovage ou des moyens de raccordement, mais elle contient généralement les deux. De même, bien qu'une cassette puisse ne concerner qu'une seule fibre optique, plusieurs fibres optiques sont traitées dans une seule cassette.

Les documents de brevet WO 2005/088373 ou WO 00/03275 décrivent une cassette optique comprenant un boîtier contenant des moyens de lovage et/ou des moyens de raccordement de fibres optiques, au moins une entrée et au moins une sortie de fibres optiques et un couvercle fermant le boîtier de façon étanche. La cassette comporte un plateau délimitant des logements et réalisé en un matériau solide étanche à l'air et à l'eau, les moyens de lovage et/ou les moyens de raccordement de fibres optiques étant placés dans lesdits logements et ledit matériau solide remplissant au moins en partie les espaces vides à l'intérieur du boîtier.

Plusieurs cassettes sont en général affectées au traitement de la totalité des fibres d'un ou de plusieurs câbles optiques à raccorder. Elles sont empilées dans une armoire ou dans un boîtier pour câbles optiques et sont montées articulées pour avoir accès à chacune d'entre elles, notamment pour des opérations de maintenance. Les armoires peuvent être placées à l'intérieur d'un bâtiment à l'abri des intempéries. Lorsque ce n'est pas possible et que les armoires sont situées à l'extérieur, elles sont conçues pour assurer un certain degré de protection, notamment à l'eau. Cependant, les variations de température, entre le jour et la nuit par exemple, peuvent entraîner une condensation de l'humidité présente dans l'air, aussi bien à l'intérieur de l'armoire qu'à l'intérieur des cassettes. Cette condensation est néfaste au bon fonctionnement des fibres optiques. Deux solutions ont alors été proposées.

Une première solution consiste à placer un absorbeur d'humidité (un matériau déshydratant) dans l'armoire. Il faut cependant changer le matériau déshydratant au moins à l'occasion de chaque re-ouverture de la/les enveloppe/s étanche/s. Une deuxième solution consiste à augmenter l'inertie thermique de l'armoire et/ou des cassettes, par exemple en doublant la paroi de l'armoire et/ou des boîtiers ou en augmentant l'épaisseur des parois. Cette solution est onéreuse et son efficacité est limitée à des variations de température pas trop grandes.

L'invention propose une solution satisfaisante à ce problème de condensation de l'humidité de l'air présent dans les cassettes. Une cassette selon l'invention peut être utilisée individuellement et à l'extérieur, exposée aux intempéries, sans nécessité d'être placée dans une armoire. Une telle cassette peut par exemple être placée à l'extérieur d'une maison ou d'un bâtiment même lorsque les conditions climatiques sont relativement sévères, comme par exemple dans les pays du nord de l'Europe.

De façon plus précise, l'invention concerne une cassette optique comprenant un boîtier contenant des moyens de lovage et/ou des moyens de raccordement de fibres optiques, au moins une entrée et au moins une sortie de fibres optiques et un couvercle fermant le boîtier de façon étanche, cassette comportant un plateau délimitant des logements et réalisé en un matériau solide étanche à l'air et à l'eau, les moyens de lovage et/ou les moyens de raccordement de fibres optiques étant placés dans lesdits logements et ledit matériau solide remplissant au moins en partie les espaces vides à l'intérieur du boîtier, caractérisé en ce que toute la surface interne du couvercle est recouverte d'une couche d'un matériau solide étanche à l'eau et à l'air, la forme de la surface de ladite couche faisant saillie à l'intérieur du boîtier et épousant sensiblement la forme de la surface de l'intérieur du boîtier située en regard du couvercle, de façon à déplacer au moins en partie l'air contenu dans le boîtier lorsque le couvercle est fermé.

Au niveau de l'entrée et/ou de la sortie des fibres optiques, ces dernières peuvent être regroupées sous forme d'un ou plusieurs câble(s).

Une cassette conforme à l'invention peut comporter une ou plusieurs des caractéristiques suivantes :
- lesdits matériaux sont insensibles aux agressions dues à l'environnement.
- lesdits matériaux sont choisis parmi une mousse à cellules fermées, un polyuréthane, un plastique et un silicate.
- des canaux pour le passage des fibres optiques sont délimités par ledit matériau du plateau.
- la cassette comprenant des moyens de lovage ayant au moins un tambour autour duquel peuvent s'enrouler au moins en partie des fibres optiques, le tambour est réalisé dans ledit matériau du plateau.
- l'entrée et la sortie du boîtier comportent chacune des moyens de passage étanche à l'air et à l'eau des fibres optiques et de rétention axiale des fibres optiques.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- la figure 1 montre en perspective un mode de réalisation d'une cassette optique conforme à l'invention, munie d'un volet en position ouverte;
- la figure 2 montre en perspective le même mode de réalisation que celui représenté sur la figure 1, mais sous un autre angle et avec le volet en position repliée;
- la figure 3 montre en perspective le boîtier de la cassette avec son couvercle, et
- la figure 4 représente en perspective un plateau permettant de diminuer la quantité d'air présent dans la cassette.

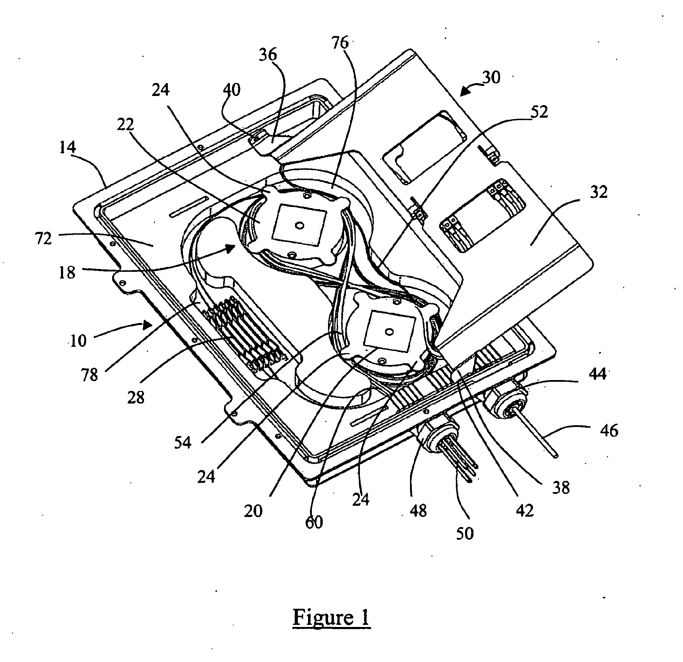

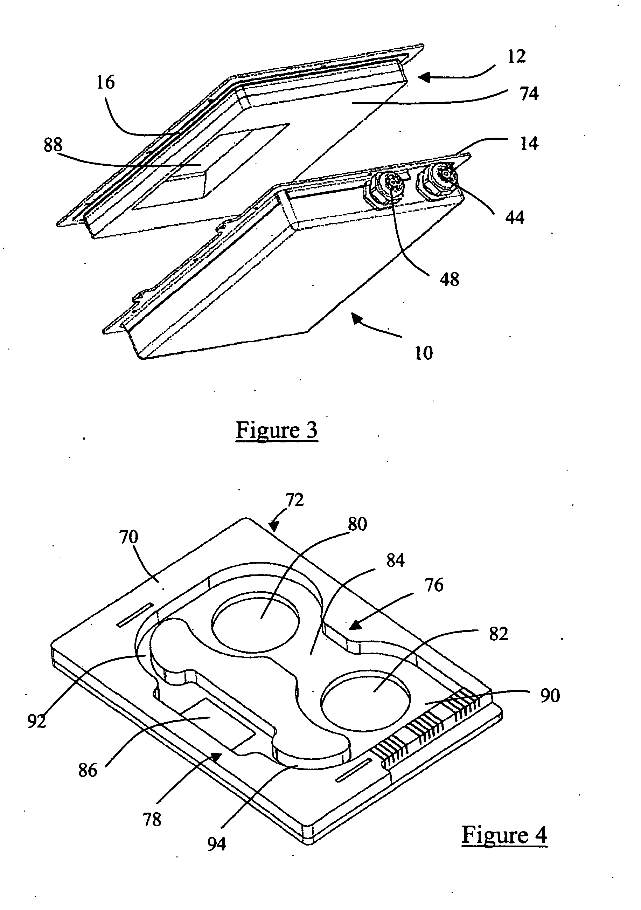

La cassette représentée sur les figures 1 à 3 comporte un boîtier 10 de forme sensiblement parallélépipédique rectangle et muni d'un couvercle 12 (figure 3). Le tour du boîtier comporte un épaulement 14 sur lequel peut être fixé (à l'aide de vis par exemple) le couvercle 12. Des moyens d'étanchéité, sous la forme par exemple d'un joint torique 16 placé sur le pourtour du couvercle 12, rendent étanche à l'eau et à l'air la fermeture du boîtier 10 par son couvercle.

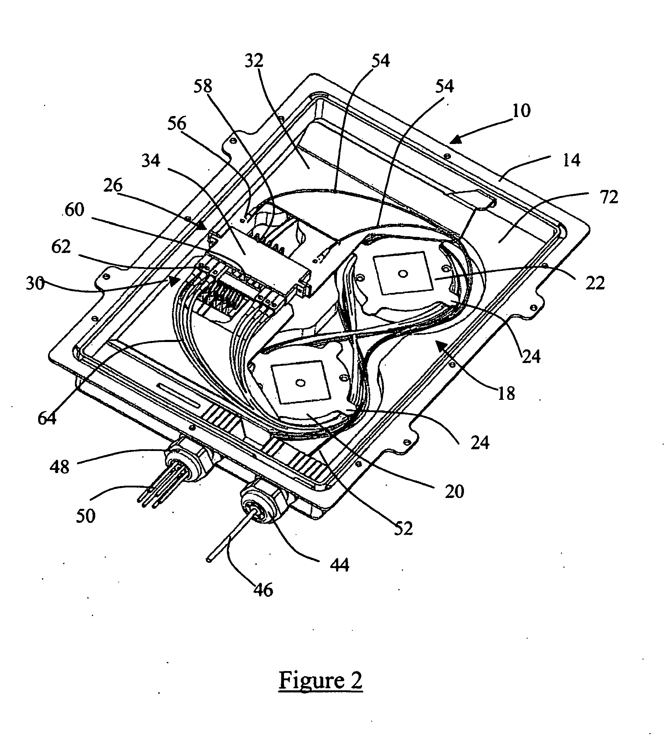

A l'intérieur du boîtier 10 sont placés des moyens de lovage 18 de fibres optiques (figures 1 et 2). Ces moyens de lovage 18 sont constitués par deux tambours identiques 20 et 22 qui peuvent être fixés au fond du boîtier, l'axe des tambours étant sensiblement perpendiculaire au fond du boîtier. Les tambours sont destinés à accueillir des fibres optiques lovées en forme de « 8 » autour des tambours. Le bord supérieur de chaque tambour est muni de pattes plates 24 de façon à retenir les fibres optiques sur les tambours.

La cassette comporte également des moyens de raccordement 26 de fibres optiques, lesquels se composent de moyens de maintien d'épissures 28 et de moyens de support de connecteurs 30 de fibres optiques. Les moyens de maintien d'épissures 28 peuvent être fixés sur le fond du boîtier 10. Ils sont constitués principalement de jeux de nervures entre lesquelles se coincent les épissures. Si nécessaire, ils sont adaptés à recevoir des épissures de différents types. Les moyens de support de connecteurs 30 sont constitués principalement d'un volet 32 et d'un système de raccords 34 (figure 2) fixé sur le volet 32. Ce dernier est muni de deux pattes de fixation 36 et 38 montées en rotation autour de deux axes respectivement 40 et 42 fixés sur deux cotés opposés du boîtier. Le volet est mobile entre une position complètement ouverte (figure 1) et une position repliée (figure 2). Pour cette dernière position, le système de raccords 34 est sensiblement situé au dessus des moyens de maintien des épissures 28. Le système de raccords 34 est destiné à relier entre elles au moins deux extrémités de fibres optiques munies chacune d'un connecteur de type mâle. Le système 34 comporte donc au moins un connecteur de type femelle permettant de relier entre elles deux extrémités de fibres optiques.

Le boîtier comporte une entrée 44 pour entrer un câble 46 de fibres optiques (par exemple basé sur une structure à tubes contenant une douzaine de fibres optiques de diamètre 250 micromètres) dans le boîtier et une sortie 48 pour sortir des câbles individuels 50 de fibres optiques du boîtier. Le passage du câble 46 et des câbles individuels 50 à travers respectivement l'entrée 44 et la sortie 48 est étanche aussi bien à l'eau qu'à l'air, grâce à l'utilisation d'un presse-étoupe. De plus, un joint entourant le câble est pressé contre le câble par un écrou ce qui immobilise le câble. On a donc à la fois une étanchéité et une rétention du câble (notamment une rétention axiale dans la direction de l'axe du câble).

Le câble 46, composé principalement des fibres optiques 52 entourées d'une gaine de protection, pénètre dans le boîtier 10 par l'entrée 44. Le câble est ensuite dénudé et les fibres optiques 52 sont lovées en forme de « 8 » autour des deux tambours 20 et 22. Le lovage a pour but de stocker les surlongueurs de fibres optiques. L'utilisation d'au moins un tambour permet de limiter le rayon de courbure des fibres optiques à une valeur minimale en dessous de laquelle les fibres optiques ne fonctionneraient plus correctement et l'utilisation de deux tambours permet d'inverser le sens de lovage pour obtenir la forme en « 8 ». L'extrémité de chaque fibre est ensuite soudée à l'extrémité d'une fibre intermédiaire de couplage 54 (appelée « pigtail » en anglais), laquelle est une fibre nue non gainée se terminant à son autre extrémité par un connecteur optique 56. On forme ainsi une épissure avec chaque fibre optique du câble d'entrée 46. Les épissures sont placées dans les moyens de maintien d'épissures 28. Les fibres intermédiaires de couplage 54 sont ensuite lovées autour des tambours 20 et 22 et les connecteurs 56 sont raccordés aux entrées 58 du système de raccords 34 fixé sur le volet 32 (figure 2). Les sorties 60 du système de raccords 34 sont reliées aux connecteurs 62 de câbles individuels de sortie 64. Chacun de ces câbles est constitué d'une fibre optique entouré d'au moins une gaine de protection et muni d'un connecteur 62 (généralement de type mâle) à l'une de ses deux extrémités. Le système de raccords 34 permet d'effectuer aisément des connexions et déconnexions des fibres optiques. Les câbles individuels de sortie 64 sont lovés autour des tambours 20 et 22, puis sortent du boîtier 10 par la sortie 48, sous forme des câbles individuels de sortie 50.

Selon l'invention, au moins une partie, de préférence substantielle, de l'air normalement présent dans le boîtier est éliminée de sorte que la condensation éventuelle de l'air restant dans le boîtier est minime et ne pose pas de problème pour le fonctionnement et l'intégrité des composants dans le boîtier. A cette fin, l'espace dans le boîtier non occupé par les moyens de lovage 18 et les moyens de raccordement 26 est rempli au moins partiellement d'un matériau 70 étanche à l'air et à l'eau. Ce matériau peut prendre la forme d'un plateau 72, dont une forme de réalisation est représentée en perspective sur la figure 4. La largeur et la longueur du plateau sont légèrement inférieures à la largeur et à la longueur du boîtier de façon à pouvoir insérer le plateau 72 dans le boîtier. Le couvercle 12 du boîtier (figure 3) est garni sur sa face interne d'une couche 74 d'un matériau étanche à l'air et à l'eau, ce matériau pouvant être identique au matériau 70. La couche 74 est fixée sur le dessous du couvercle par exemple par collage. Selon un mode de réalisation, la hauteur du plateau 72 additionnée à la hauteur de la couche 74 du couvercle est sensiblement égale à la hauteur du boîtier de façon à minimiser la quantité d'air restant dans le boîtier.

Le plateau 72 comporte des logements 76 et 78 dans lesquels sont placés respectivement les moyens de lovage 18 et les moyens de maintien d'épissures 28. Le logement 76, en forme de « 8 », comporte des emplacements 80 et 82 pour les tambours 20 et 22 de lovage et un passage 84, entre les emplacements 80 et 82, pour le lovage des fibres optiques entre les tambours. Selon une autre forme de réalisation, les tambours eux-mêmes sont façonnés dans le matériau 70, les tambours faisant ainsi partie intégrante du plateau 72.

Le logement 78 permet de façon générale d'accueillir les moyens de raccordement 26 des fibres optiques. Dans le mode de réalisation particulier décrit précédemment, en regard des figures 1 et 2, le système de raccords 34 est fixé sur le volet 32. Le plateau 72 comporte alors un logement 86 pour les moyens de maintien des épissures 28 et un logement 88 est aménagé dans la couche 74 du couvercle pour accueillir le système de raccords 34. Dans une configuration classique de cassette, c'est-à-dire en l'absence du volet 32 lorsque le système de raccords est placé dans le boîtier à proximité des moyens de maintien des épissures, le plateau 72 comporte un logement pour le système de raccords 34.

Le plateau 72 comporte également des espaces libres ou des canaux 90, 92 et 94 pour le passage des fibres optiques respectivement de l'entrée 44 vers les moyens de lovage, de ces derniers vers les moyens de maintien des épissures, et de ces derniers vers la sortie 48.

Selon un autre mode de réalisation possible (non représenté), le plateau 72 pourrait être de faible épaisseur et comporter un rebord fixé de façon étanche à l'air et à l'eau sur le pourtour supérieur du boîtier. Le plateau serait en quelque sorte suspendu, soit sur le bord du plateau (par exemple sur le rebord 14), soit sur une cornière fixée sur les cotés intérieurs du boîtier. De l'air serait donc présent dans la partie inférieure du boîtier, entre le fond du boîtier et le plateau. Cependant du fait de l'étanchéité de la fixation du plateau, une condensation éventuelle de l'air dans cette partie inférieure du boîtier (entre le fond du boîtier et la surface inférieure du plateau) serait sans effet sur les composants placés dans les logements du plateau.

Le matériau 70, en plus d'être solide et étanche à l'eau et à l'air, est de préférence insensible aux agressions dues à l'environnement, telles que par exemple le gel et la neige. C'est le cas lorsque la cassette est destinée à être utilisée à l'extérieur, par exemple dans un pays où les conditions hivernales sont sévères. Le matériau peut être par exemple une mousse à cellules fermées, un plastique, un polyuréthane ou des silicates. Le plateau peut être par exemple usiné ou moulé, selon le matériau choisi.

le mode de réalisation représenté sur les figures 1 et 2 comporte des moyens de lovage et des moyens de raccordement de fibres optiques. Il est évident qu'une cassette conforme à la présente invention pourrait ne comporter que dés moyens de lovage ou que des moyens de raccordement de fibres optiques. De plus, une cassette conforme à l'invention pourrait comporter plusieurs entrées et/ou plusieurs sorties.

## Revendications

1. Cassette optique comprenant un boîtier (10) contenant des moyens de lovage (18) et/ou des moyens de raccordement (26) de fibres optiques, au moins une entrée (44) et au moins une sortie (48) de fibres optiques et un couvercle (12) fermant le boîtier de façon étanche, cassette comportant un plateau (72) délimitant des logements (76, 78) et réalisé en un matériau (70) solide étanche à l'air et à l'eau, les moyens de lovage et/ou les moyens de raccordement de fibres optiques étant placés dans lesdits logements et ledit matériau solide remplissant au moins en partie les espaces vides à l'intérieur du boîtier, **caractérisé en ce que** toute la surface interne du couvercle (12) est recouverte d'une couche (74) d'un matériau solide étanche à l'eau et à l'air, la forme de la surface de ladite couche (74) faisant saillie à l'intérieur du boîtier et épousant sensiblement la forme de la surface de l'intérieur du boîtier située en regard du couvercle, de façon à déplacer au moins en partie l'air contenu dans le boîtier lorsque le couvercle est fermé.

2. Cassette selon l'une des revendications 1, **caractérisée en ce que** lesdits matériaux sont insensibles aux agressions dues à l'environnement.

3. Cassette selon la revendication 1 ou 2, **caractérisée en ce que** lesdits matériaux sont choisis parmi une mousse à cellules fermées, un polyuréthane, un plastique et un silicate.

4. Cassette selon l'une des revendications 1 à 3, **caractérisée en ce que** des canaux (92, 94) pour le passage des fibres optiques sont délimités par ledit matériau du plateau.

5. Cassette selon l'une des revendications précédentes et comprenant des moyens de lovage (18) ayant au moins un tambour (20, 22) autour duquel peuvent s'enrouler au moins en partie des fibres optiques, cassette **caractérisée en ce que** le tambour est réalisé dans ledit matériau du plateau.

6. Cassette selon l'une des revendications précédentes, **caractérisée en ce que** l'entrée (44) et la sortie (48) du boîtier comportent chacune des moyens de passage étanche à l'air et à l'eau des fibres optiques et de rétention axiale des fibres optiques.

## Claims

1. An optical cassette comprising a case (10) containing coiling means (18) and/or connection means (26) of optical fibers, at least one optical fiber inlet (44) and at least one optical fiber outlet (48) and a lid (12) sealably closing the case, cassette including a plate (72) defining housings (76, 78) and made of a solid airtight and watertight material (70), the optical fiber coiling and/or connection means being placed in said housings and said solid material at least partially filling the empty spaces inside the case, **characterized in that** the entire inner surface of the lid (12) is covered with a layer (74) of a solid watertight and airtight material, the surface shape of said layer (74) protruding inside the case and essentially fitting the surface shape of the inside of the case situated opposite the lid, so as to at least partially displace the air contained in the case when the lid is closed.

2. The cassette according to one of claims 1, **characterized in that** said materials are not sensitive to environmental attacks.

3. The cassette according to claim 1 or 2, **characterized in that** said materials are chosen among a closed cell foam, a polyurethane, a plastic and a silicate.

4. The cassette according to one of claims 1 to 3, **characterized in that** channels (92, 94) for the passage of optical fibers are defined by said material of the plate.

5. The cassette according to one of the preceding claims and comprising coiling means (18) having at least one drum (20, 22) around which the optical fibers can be at least partially wound, cassette **characterized in that** the drum is made in said material of the plate.

6. The cassette according to one of the preceding claims, **characterized in that** the inlet (44) and the outlet (48) of the case each include airtight and watertight means for passage of the optical fibers and for axial retention of the optical fibers.

## Patentansprüche

1. Optische Kassette, die ein Gehäuse (10) umfasst, das Mittel zum Aufwickeln (18) und/oder Mittel zum Verbinden (26) von Glasfasern, mindestens einen Eingang (44) und mindestens einen Ausgang (48) für die Glasfasern und einen das Gehäuse dicht verschließenden Deckel (12) umfasst, wobei die Kassette eine Platte (72) umfasst, die Aufnahmen (76, 78) begrenzt und aus einem stabilen, luft- und wasserdichten Werkstoff (70) hergestellt ist, wobei die Mittel zum Aufwickeln und/oder die Mittel zum Verbinden von Glasfasern in den Aufnahmen platziert sind und der stabile Werkstoff mindestens teilweise die leeren Räume im Gehäuse füllt, **dadurch gekennzeichnet, dass** die gesamte innere Oberfläche des Deckels (12) mit einer Schicht (74) eines stabilen, luft- und wasserdichten Werkstoffs überzogen ist, wobei die Form der Oberfläche der Schicht (74) in den Innenraum des Gehäuses hervorsteht und etwa die Form der Oberfläche im Innenraum des Gehäuses gegenüber dem Deckel derart annimmt, dass die im Gehäuse enthaltene Luft mindestens teilweise bewegt wird, wenn der Deckel geschlossen wird.

2. Kassette nach Anspruch 1, **dadurch gekennzeichnet, dass** die Werkstoffe umweltbedingten Angriffen gegenüber unempfindlich sind.

3. Kassette nach Anspruch 1 oder 2, **dadurch gekennzeichnet, dass** die Werkstoffe aus einem Schaum mit geschlossenen Zellen, einem Polyurethan, einem Kunststoff und einem Silikat ausgewählt sind.

4. Kassette nach einem der Ansprüche 1 bis 3, **dadurch gekennzeichnet, dass** vom Werkstoff der Platte Kanäle (92, 94) für den Durchgang der Glasfasern begrenzt werden.

5. Kassette nach einem der vorangehenden Ansprüche und die Mittel zum Aufwickeln (18) umfasst, die mindestens eine Trommel (20, 22) aufweisen, um die mindestens teilweise Glasfasern aufwickelbar sind, wobei die Kassette **dadurch gekennzeichnet ist, dass** die Trommel aus dem Werkstoff der Platte hergestellt ist.

6. Kassette nach einem der vorangehenden Ansprüche, **dadurch gekennzeichnet, dass** der Eingang (44) und der Ausgang (48) des Gehäuses jeweils luft- und wasserdichte Mittel für den Durchgang der Glasfasern und für den axialen Rückhalt der Glasfasern umfassen.
